# EUROPEAN PATENT APPLICATION

(11) **EP 2 410 103 A2**
(43) Date of publication of application: **25.01.2012**
(21) Application number: 11398007.2
(22) Date of filing: 21.07.2011
(51) Int. Cl.: E04C 1/42

(54) **Translucent lightweight concrete**

(30) Priority: 22.07.2010 PT 10521610
(71) Applicant: Germano, Joâo Manuel Machado Pinto, 1990-092 Lisboa (PT)
(72) Inventor: Germano, Joâo Manuel Machado Pinto, 1990-092 Lisboa (PT)

(57) **Abstract**

A translucent lightweight concrete as construction material, characterized by the fact that it incorporates fiber optics (2), granulated cork (3) and special mortar cement (1).

## Description

### Technical field of the invention

The invention presented here belongs to the technical field of building materials, decorative materials and materials for furniture. Translucent lightweight Concrete is a new material with various applications in the construction field, architecture, decoration and even furniture.

### Prior art

There are several solutions currently on the market of lightweight concrete and also some translucent concrete, but there isn't until this date any material that has this two innovative features combined.

Throughout history, the lightweight concrete have played a significant role in the construction of important structures. The lightweight concrete have important features that make its use particularly interesting, including: weight reduction, improved physical properties and their durability. In the various types of lightweight concrete the type of lightweight aggregate used varies, like the expanded granulated cork, expanded clay, pumice stone, polystyrene foam or EPS.

Regarding the translucent concrete there are few brands in the market because it is fairly recent. It is a combination of optical filaments and concrete thin. Thousands of optical filaments are arranged side by side on a concrete base leaving the light to pass from one side to the other. Due to its small thickness of these filaments they combine with the concrete.

### Detailed description of the invention

The invention results from the unique combination of products that are available on the market by creating an unique and innovative building material. Its main features, the translucency and lightness, resulting from the incorporation of optical fibers and granulated cork as a household composition that change the physical properties of the resulting compound. It also acquired other properties: acoustic insulation, thermal insulation and less retraction during the cure.

From measurements of each of the constituents of the translucent lightweight concrete we can expect different results for different forms and applications. Several formulations and dosages can be studied in order to ensure a superior range of purposes.

After all the constituents of the lightweight concrete are measured, they are discharged into the mixer where it is processed homogeneously this mix. After finished this process the concrete is discharged into pre-defined forms, depending on the final shape desired, containing optical filaments tensioned on the quantity and final effects desired. With the use of vibration the mass is fluidly mixed with granulated cork, through the filaments. After the curing we de-mold to perform the cuts in the forms and obtain the desired products.

### Description of Figures / Components

### Cork (3):

By definition, the cork is the parenchyma suberose originated from the periderm of the cork oak (Quercus suber L.).

It consists mainly of suberin, a substance which represents about 40% of its dry weight, lignin (+ or-20%), polysaccharides (+ or-20%) and other products (+ or - 20%).

Macroscopically, is a light, elastic material and practically impermeable to liquids and gases, thermal, electric, acoustic and vibration insulation, also innocuous and virtually rot-proof, with the ability to be compressed almost without lateral expansion.

It has a high dimensional stability and shows a considerable resistance against compressive loads. Cork is also a material that dissipates the deformation energy.

It has an average density of 200 kg/m3, and a low thermal conductivity. It also has a remarkable chemical and biological stability, good fire resistance and high durability in a freeze-unfreeze conditions.

All these features allow a wide range of applications for cork.

### Fiber optic (2):

It is composed of silicon or hin th e polymeric materials, dielectrics, capable of transmitting light. These filaments may have different diameters depending on the application, ranging from smallest diameters in the order of microns to several millimeters.

The transmission results from the following process: a beam of light is launched at one end of the fiber, and because of the material's optical characteristics, the beam travels through the fiber with successive reflections without loss of intensity.

The fiber is composed by two layers: The core and cladding. The Light transmission happens in the core.

The light transmission within the fiber it's possible because of the difference in refractive index between the coating and the core, the nucleus always has a higher refractive index, that feature coupled with the angle of incidence of the light beam, allows the phenomenon of total reflection.

### Special mortar cement (fine aggregate) (1):

Mixture made with water, binder (in this case cement), aggregates selected depending on the finish, end use and pigment to ensure a wide range of colors of your choice.

That mortar comes in a plastic state in the first hours after the execution allowing its workability and molding, with the curing it will gain resistance, resilience and durability. The binder element used is the cement, which results from a combination of chemical pre-determined and well balanced, calcium, silica, iron and aluminum, throw a manufacturing complex process tightly controlled. The fine aggregates used will vary depending on the final appearance and use / resistance desired. Being the natural or artificial sand (stone dust) and crushed stone or natural fine-grained materials the most commonly used in these compounds. The water used contributes to the exothermic chemical reaction crystallization of hydration products, there by gaining resistance. Its characteristics depend on the proportion of the materials contained.

### Applications

Thanks to new features this material presents innovative technical solutions, semi-natural and ecological, for the traditional construction problems allowing a wide area of applications in construction, architecture, decoration and even furniture.

Some of the possible applications for this new material are spread over several areas creating new possibilities to various products such as:
●Paving solutions;
●Blocks;
●Screen partitions;
●Furniture;
●Regular and irregular surfaces;
●Cladding panels;
●Fillers;
●Coatings;
●Sculptures;
●Benches;
●Decorative stone;
●Custom parts in shape, color and size.

Because of its new features this new material, enables a new reality of applications that challenges the imagination of architects, engineers and designers to create new spaces highlighting the beauty and innovation forms of the translucent lightweight concrete.

You can dramatically transform the concrete applications allowing games of shadows, transparencies and lights as well as well as the projection of colors, images, logos and more. The flexibility of the fibers allow you to create different types of finishes and different degrees of translucency.

Through concrete walls you can get a lighting comfort thus changing the perception and feeling that we had with this same material. We can also use it to create elements of slenderness and vain once impossible due to its low density.

The thermal resistance, the acoustic behavior, the possibility of finish, weight and their high durability under freeze-unfreeze conditions will create a new generation of interior and exterior coverings.

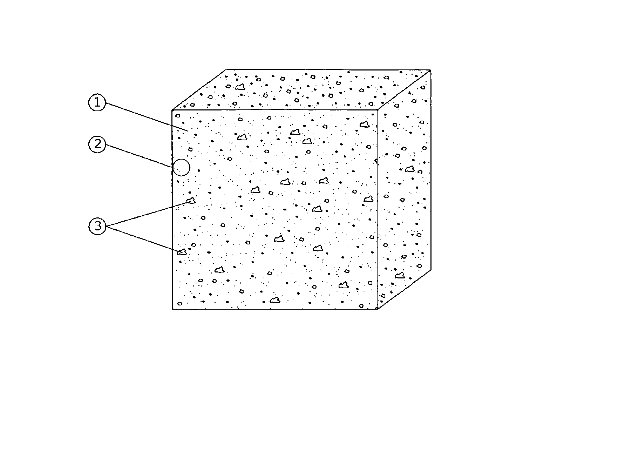

## Claims

1. Translucent lightweight Concrete as construction material, decoration material and material for furniture **characterized by** the fact that its composition is based on cork, fiber optics and special mortar cement.

2. Translucent lightweight Concrete as construction material, decoration material and material for furniture, **characterized by**, according to previous claim, a typical compact and solid consistency of concrete materials combined with a reduced density and its translucency.

3. Translucent lightweight Concrete as construction material, decoration material and material for furniture, **characterized by**, according to previous claim, presents characteristics of acoustic and thermal insulation.

4. Translucent lightweight Concrete as construction material, decoration material and material for furniture, **characterized by**, according to previous claim, a wide range of options of finishes, depending on the quantities of the components used, colors, shapes and dimensions.
